# EUROPÄISCHE PATENTSCHRIFT

(11) **EP 2 143 190 B1**
(45) Veröffentlichungstag und Bekanntmachung des Hinweises auf die Patenterteilung: **19.10.2016**
(21) Anmeldenummer: 08718110.3
(22) Anmeldetag: 20.03.2008
(51) Int. Cl.: H02K 11/40, H02K 5/14

(54) **ELEKTROMOTOR**
ELECTROMOTOR
MOTEUR ÉLECTRIQUE

(30) Priorität: 25.04.2007 DE 102007019431
(43) Veröffentlichungstag der Anmeldung: 13.01.2010
(73) Patentinhaber: Robert Bosch GmbH, 70442 Stuttgart (DE)
(72) Erfinder: NIEDERER, Armin, 76137 Karlsruhe (DE); STUBENBORD, Linh-Thao, 77815 Buehl (DE); KUECHEN, Tobias, 79312 Emmendingen (DE)
(86) Internationale Anmeldenummer: PCT/EP2008/053400
(87) Internationale Veröffentlichungsnummer: WO 2008/131995

(56) Entgegenhaltungen:
- EP-B1- 1 470 630
- WO-A-2005/046025
- WO-A-2006/015914
- DE-A1- 10 162 818
- DE-A1- 19 904 302
- DE-U1- 20 301 956
- JP-A- 60 219 940
- US-A- 3 691 542
- US-A- 4 535 377
- US-A1- 2001 017 495

## Beschreibung

Die Erfindung betrifft einen Elektromotor insbesondere mit einer Anordnung für eine EMV-Entstörung.

Das Kommutierungssystem von DC-Motoren ist in der Regel mit einem Kommutator und Bürsten aufgebaut. Die Bürsten laufen auf der Kommutatoroberfläche entlang der sogenannten Kommutatorlamellen und ermöglichen so eine Kontaktierung von auf dem Rotor angebrachten Spulenwicklungen. Verlässt eine Bürste eine Kommutatorlamelle aufgrund der Rotation des Rotors, so erfolgt ein Schaltvorgang, die so genannte Kommutierung. Hierbei können Gasentladungen mit sehr steilen Stromanstiegszeiten entstehen, die zu einer hochfrequenten Störabstrahlung führen.

Üblicherweise erfolgt die Entstörung eines Elektromotors durch Entstörfilter, das je nach Anforderung mit Entstörkondensatoren und/oder Entstörinduktivitäten realisiert sein kann. Im Fall von Entstörkondensatoren sind diese zwischen den Versorgungsspannungsleitungen oder zwischen einem Sternpunkt und den Versorgungsspannungsleitungen angeschlossen. Zudem können so genannte Varistoren zur Begrenzung des Motorabschaltimpulses verwendet werden.

Trotz derartiger Entstörmaßnahmen kann die elektromagnetische Abstrahlung eines Elektromotors nicht vollständig unterbunden werden. Es ist daher Aufgabe der vorliegenden Erfindung, einen Elektromotor zur Verfügung zu stellen, bei dem insbesondere für hohe Frequenzen eine deutliche Verbesserung der Entstördämpfung erreicht werden kann.

Die Druckschrift JP 60 219940 beschreibt einen Elektromotor mit lediglich einem Kontaktierungselement zum elektrischen Kontaktieren einer Rotorwelle.

In der Druckschrift US 4,535,377 A ist lediglich die Kontaktierung der Rotorwelle mit einem Massepotential bzw. mit Phasenspannungen eines elektronisch kommutierten Elektromotors über entsprechende Kapazitäten dargestellt.

Aus der Druckschrift US 2001/0017495 A1 ist eine Gleichstrommaschine mit einer Kontaktierung der Rotorwelle über das Motorgehäuse bekannt.

Aus der Druckschrift EP 1 470 630 B1 ist eine Vorrichtung zur Funkentstörung eines Gleichstrommotors mit einem über Bürsten gespeisten Rotor und mit einer Entstörschaltung bekannt, welche wenigstens einen Kondensator und vorzugsweise weitere Entstörelemente aufweist.

Die Druckschrift US 3 691 542 A beschreibt einen Festplattenantrieb mit einem Gleichstrommotor, wobei die Welle des Gleichstrommotors mit einem zwischen der rotierenden Platte und einem Gehäuse der Festplatte ausgebildeten Kondensator gekoppelt ist, der zur Entstörung dient.

Die obige Aufgabe wird durch den Elektromotor nach Anspruch 1 gelöst.

Weitere vorteilhafte Ausgestaltungen der Erfindung sind in den abhängigen Ansprüchen angegeben.

Gemäß einem Aspekt ist ein Elektromotor vorgesehen. Der Elektromotor umfasst eine elektrisch leitende Rotorwelle, eine Leiterplatte, einen auf der Rotorwelle angeordneten Kommutator, der über Bürsten und ein jeweiliges Verbindungselement mit der Leiterplatte in elektrischer Verbindung steht, ein auf der Rotorwelle angeordnetes Kontaktierungselement zum elektrischen Kontaktieren der Rotorwelle mit einer Kontaktstelle, sowie ein Verbindungselement zum elektrischen Kontaktieren eines Motorgehäuses des Elektromotors mit der Kontaktstelle, wobei die Kontaktstelle auf der Leiterplatte als Sternpunkt vorgesehen ist, um ein virtuelles oder festes Potenzial bereitzustellen. Es sind ein oder mehrere kapazitive Bauelemente und/oder ein oder mehrere induktive Bauelemente auf der Leiterplatte vorgesehen, um das Kontaktierungselement mit einem oder mehreren festen Potenzialen, insbesondere Versorgungsspannungspotenzialen, zu verbinden.

Eine Idee der vorliegenden Erfindung besteht darin, die Rotorwelle elektrisch mit einem virtuellem oder vorgegebenen festen Potenzial, insbesondere einem Versorgungspotenzial, zu koppeln. Dies führt zu einer deutlich reduzierten Störabstrahlung im hochfrequenten Bereich im Vergleich zu einem Elektromotor, dessen Rotorwelle elektrisch floatend ausgebildet ist.

Weiterhin kann das Kontaktierungselement mit einem Lager, insbesondere einer Kalotte, ausgebildet sein.

Es kann vorgesehen sein, dass die Kontaktstelle mit einem Versorgungsspannungspotenzial und/oder mit einem weiteren Motorelement, insbesondere mit zumindest einem Teil des Motorgehäuses, elektrisch gekoppelt ist.

Weiterhin kann die Kontaktstelle mit einem Leiterbereich, der flächig auf der Leiterplatte angeordnet ist und der als Massefläche dient, elektrisch verbunden sein.

Bevorzugte Ausführungsformen der vorliegenden Erfindung werden nachfolgend anhand der beigefügten Zeichnungen näher erläutert. Es zeigen:
Fig. 1 eine perspektivische Darstellung eines Elektromotors gemäß einer Ausführungsform der Erfindung;
Fig. 2 eine Querschnittsdarstellung zur Veranschaulichung der Kontaktierung der Rotorwelle mit einem Sternpunkt;
Fig. 3 ein Schaltbild zur Darstellung einer Entstörung des Elektromotors der Fig. 1.

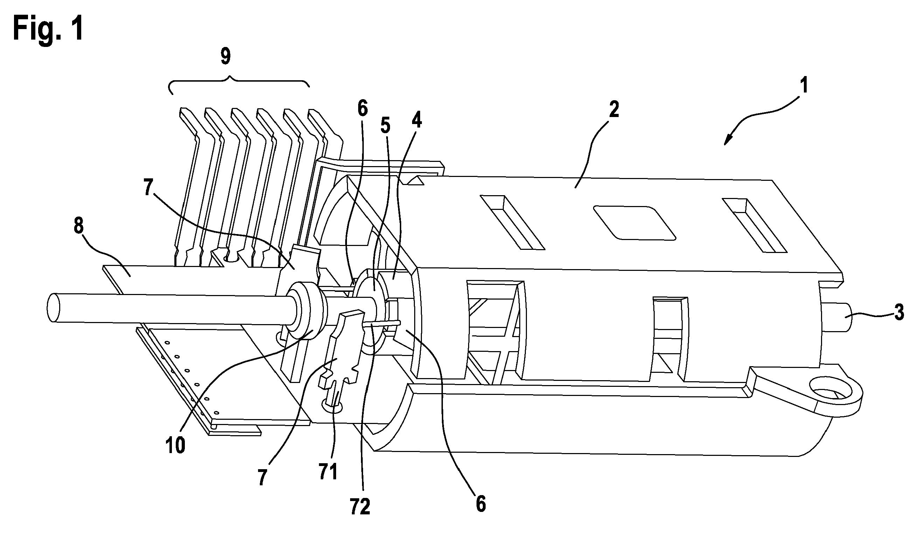

Fig. 1 zeigt eine perspektivische Darstellung eines Elektromotors 1 mit einem Motorgehäuse 2, das in dem gezeigten Ausführungsbeispiel aus zwei Motorhalbschalen zusammengesetzt ist. Entlang einer Mittenachse des Motorgehäuses 2 ist eine Rotorwelle 3 angeordnet, auf der mehrere Rotorspulen angeordnet sind (durch Motorgehäuse 2 verdeckt), die über Kommutatorlamellen 4 eines Kommutators 5 elektrisch kontaktierbar sind. An einer Innenfläche des Motorgehäuses 2 sind Polmagnete (nicht sichtbar) so angeordnet, dass sie den Statorspulen im Wesentlichen gegenüberliegen.

Die Kommutatorlamellen des Kommutators 5 werden über zwei Bürsten 6 kontaktiert, die an dem Motorgehäuse 2 angeordnet sind, und z.B. mithilfe eines Federelementes auf den Kommutator 5 gedrückt werden, um eine zuverlässige elektrische Kontaktierung zwischen der jeweiligen Kommutatorlamelle 4 und der entsprechenden Bürste 6 zu erreichen. Die Bürsten 6 stehen über ein jeweiliges Verbindungselement 7 mit einer Leiterplatte 8 in Verbindung.

Die Verbindungselemente 7 sind in der gezeigten Ausführungsform als Lötstifte 71 ausgebildet, die über einen geeigneten Drahtabschnitt 72 mit den Bürsten 6 verbunden sind. Die Leiterplatte 8 weist seitlich (in einer Richtung senkrecht zur Rotorwelle) Anschlusskontakte 9 auf, über die der Elektromotor 1 extern kontaktierbar ist. Die Leiterplatte 8 trägt Entstörbauelemente, wie z.B. Entstörkondensatoren, Entstörinduktivitäten und dgl. Anstelle der Leiterplatte 8 kann auch ein anderes geeignetes Trägerelement vorgesehen sein.

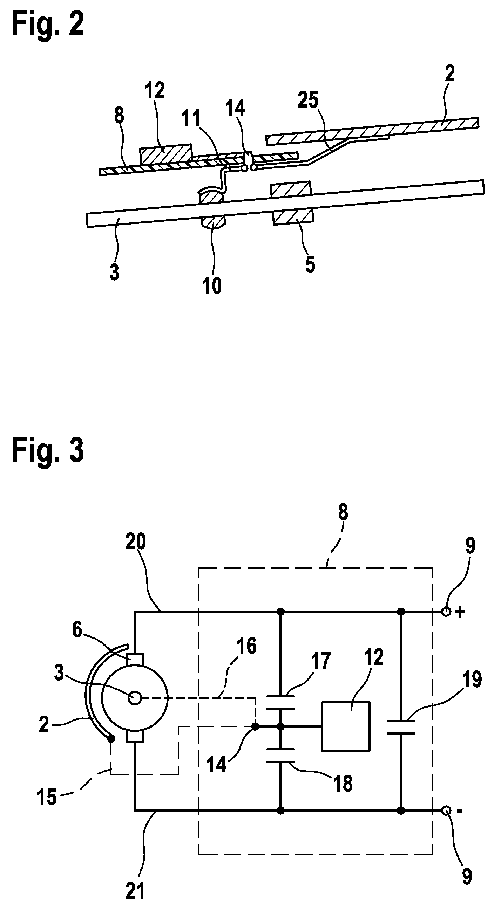

Die Rotorwelle 3 ist mit einer Kalotte 10 gelagert, die über eine Kontaktierung 11 (siehe Fig. 2) mit einer Kontaktstelle 14 auf der Leiterplatte 8 elektrisch verbunden ist. Sowohl die Rotorwelle 3 als auch die Kalotte 10 sind aus einem leitenden Material ausgebildet. Die Rotorwelle 3 ist aus Gründen einer ausreichenden Stabilität vorzugsweise aus einem Metall gebildet. Die Kalotte 10 kann vorzugsweise aus einem Metall, einem leitfähigen Kunststoff, einer leitfähigen Keramik und dgl. ausgebildet sein, um die Rotorwelle 3 elektrisch kontaktieren zu können. Auf diese Weise kann die Rotorwelle 3 über die Kalotte 10 entweder unmittelbar oder über ein geeignetes Entstörbauelement mit einem virtuellen Potenzial, wie z.B. einem Sternpunkt, an den auch ein weiteres Motorteil, wie z.B. das Motorgehäuse 2, angeschlossen ist, oder mit einem festen Potenzial, wie beispielsweise einem der Versorgungsspannungspotenziale, verbunden sein.

Im in Fig. 2 gezeigten Ausschnitt aus dem Elektromotor 1 der Fig. 1 ist die Rotorwelle 3 über die Kalotte 10 mit der Kontaktstelle 14 auf der Leiterplatte 8 verbunden, wodurch bereits eine Erhöhung der Dämpfung von hochfrequenten Störsignalen, insbesondere ab Frequenzen von 30 MHz erreicht werden kann. Weiterhin ist über ein Verbindungselement 25, das z.B. als Blech ausgebildet sein kann, das Motorgehäuse 2 mit der Kontaktstelle 14 verbunden. Das Verbindungselement 25 kann zur einfacheren Montage der Leiterplatte 8 in das Motorgehäuse elastisch ausgebildet sein und im eingesetzten Zustand gegen die Innenseite des Motorgehäuses 8 drücken, um dieses so elektrisch zu kontaktieren.

Die Ursache der Dämpfungszunahme durch das Kontaktieren der Rotorwelle 3 kann durch zwei Effekte erklärt werden. Erstens werden die hochfrequenten Störströme zu einem virtuellen, breitflächigen, voluminösen Massepotenzial, wie es beispielsweise durch das ebenfalls mit der Kontaktstelle 14 verbundenen Motorgehäuse 2 gebildet wird, abgeleitet. Zweitens bewirkt die Kontaktierung über die Kalotte 10 eine Veränderung der wirksamen Antennenlänge und damit der Störabstrahlung und Einkopplung in die benachbarten Leiterbahnen auf der Leiterplatte 8.

Alternativ oder zusätzlich zu der Verbindung der Kalotte 10 mit dem Motorgehäuse 2 kann der Sternpunkt, der durch die Kontaktstelle 14 gebildet wird, über eine oder mehrere Kapazitäten mit einem oder mehreren Versorgungsspannungspotenzialen verbunden sein, die über die Anschlusskontakte 9 bereitgestellt werden.

Die Leiterplatte 8 kann mit Abschirmlagen vorgesehen sein, um eine Schirmung der darin geführten Verbindungsleitungen zu erreichen. Eine Abschirmlage kann als Massefläche 12 aufgeführt sein, die flächig auf der Leiterplatte 8 angeordnet ist und über eine geeignete Verbindung elektrisch mit der Kontaktstelle 14 verbunden ist. Die Kontaktstelle 14 kann sich innerhalb der Massefläche 12 befinden. Weiterhin können sowohl die Anschlüsse mit dem Motorgehäuse 2, mit der Rotorwelle 3 mit dem entsprechenden ersten und zweiten Kondensator über verschiedene Stellen der Massefläche 14 vorgenommen werden.

In Fig. 3 ist ein Schaltbild für die Ankopplung der Rotorwelle 3 gemäß einer bevorzugten Ausführungsform dargestellt. Man erkennt eine erste und eine zweite Versorgungsspannungsleitung 20, 21, die die entsprechenden externen Anschlusskontakte 9 über die Verbindungselemente 7 mit den Bürsten 6 verbinden. Die Versorgungsspannungsleitungen 20, 21 werden über die Leiterplatte 8, die in Fig. 3 mit einer gepunkteten Linie dargestellt ist, geführt. Die Kontaktstelle 14 dient als Sternpunkt, der über eine Verbindung (gepunktet dargestellt) 15 mit niedriger Impedanz mit dem Motorgehäuse 2 verbunden ist.

Weiterhin ist die Rotorwelle 3 über eine Verbindungsleitung 16, die ebenfalls impedanzarm ausgeführt ist, mit der Kontaktstelle 14 als Sternpunkt verbunden. Die Kontaktstelle 14 ist über einen ersten Kondensator 17 mit der ersten Versorgungsspannungsleitung 20 und über einen zweiten Kondensator 18 mit der zweiten Versorgungsspannungsleitung 21 verbunden. Zur weiteren Entstörung kann ein dritter Kondensator 19 zwischen der ersten und zweiten Versorgungsspannungsleitung 20, 21 angeschlossen sein. Zusätzlich oder alternativ zu dem dritten Kondensator 19 kann eine Induktivität in der ersten und/oder der zweiten Versorgungsspannungsleitung 20, 21 in Reihe zu dem Motor vorgesehen sein.

Erfindungsgemäß ist vorgesehen, die Rotorwelle 3 mit einem wenigstens virtuellen Potenzial, das durch ein weiteres leitendes, nicht mit einem festen Potenzial verbundenen Motorelement gebildet ist, zu verbinden. Um eine Reduzierung der Störabstrahlung im hochfrequenten Bereich zu erreichen, ist jedoch bereits eine der folgenden Maßnahmen ausreichend:
1. Die Rotorwelle 3 wird leitend mit einem weiteren leitenden nicht mit einem festen Potenzial verbundenen Element des Elektromotors 1, insbesondere dem Motorgehäuse 2, verbunden;
2. die Rotorwelle 3 wird über einen Kondensator mit der ersten Versorgungsspannungsleitung 20 verbunden; und
3. die Rotorwelle 3 wird über einen Kondensator mit der zweiten Versorgungsspannungsleitung 21 verbunden.

Die Rotorwelle 3 kann alternativ auch über eine Induktivität mit der ersten oder der zweiten Versorgungsspannungsleitung verbunden sein.

Die Kontaktierung der Rotorwelle 3 muss nicht zwingend über deren Lagerung erfolgen. Die Rotorwelle 3 kann auch mit einer weiteren unabhängig von deren Lagerung vorgesehenen Kontaktierung versehen sein, die eine elektrische Kontaktierung der Rotorwelle 3 ermöglicht.

Durch die Anbindung der Rotorwelle 3 an zumindest ein virtuelles Potenzial kann eine erhebliche Dämpfung von hochfrequenten Störströmen erreicht werden. Weiterhin kann bei einer Massekontaktierung der Rotorwelle die wirksame Antennenlänge für die elektromagnetische Störabstrahlung verändert werden, sodass die elektromagnetische Abstrahlung reduziert wird und dadurch die Einkopplung auf benachbarte Leiterbahnen auf der Leiterplatte verringert werden kann.

## Patentansprüche

1. Elektromotor (1) umfassend:
- eine elektrisch leitende Rotorwelle (3);
- eine Leiterplatte (8); und
- einen auf der Rotorwelle (3) angeordneten Kommutator (5), der über Bürsten (6) und ein jeweiliges Verbindungselement (7) mit der Leiterplatte (8) in elektrischer Verbindung steht,
**gekennzeichnet durch**
- ein auf der Rotorwelle (3) angeordnetes Kontaktierungselement (10) zum elektrischen Kontaktieren der Rotorwelle (3) mit einer Kontaktstelle (14), und
- ein Verbindungselement (25) zum elektrischen Kontaktieren eines Motorgehäuses (2) des Elektromotors (1) mit der Kontaktstelle (14),
wobei die Kontaktstelle (14) auf der Leiterplatte (8) als Sternpunkt vorgesehen ist, um ein virtuelles oder festes Potenzial bereitzustellen,
wobei ein oder mehrere kapazitive Bauelemente (17,18, 19) und/oder ein oder mehrere induktive Bauelemente auf der Leiterplatte (8) vorgesehen sind, um das Kontaktierungselement (10) mit einem oder mehreren festen Potenzialen, insbesondere Versorgungsspannungspotenzialen, zu verbinden.

2. Elektromotor (1) nach Anspruch 1, **dadurch gekennzeichnet, dass** das Kontaktierungselement (10) als eine die Rotorwelle (3) lagernde, elektrisch leitende Kalotte (10) ausgebildet ist.

3. Elektromotor nach Anspruch 1, **dadurch gekennzeichnet, dass** die Kontaktstelle (14) elektrisch mit einem Versorgungsspannungspotenzial gekoppelt ist.

4. Elektromotor nach Anspruch 1, **dadurch gekennzeichnet, dass** die Kontaktstelle (14) mit einem Leiterbereich, der flächig auf der Leiterplatte (8) angeordnet ist und der als Massefläche zum Bereitstellen des virtuellen .oder festen Potenzials dient, elektrisch verbunden ist.

## Claims

1. Electric motor (1) comprising:
- an electrically conductive rotor shaft (3);
- a printed circuit board (8); and
- a commutator (5) which is arranged on the rotor shaft (3) and is electrically connected to the printed circuit board (8) by means of brushes (6) and a respective connecting element (7),
**characterized by**
- a contact-making element (10), which is arranged on the rotor shaft (3), for making electrical contact with the rotor shaft (3) by way of a contact point (14), and
- a connecting element (25) for making electrical contact with a motor housing (2) of the electric motor (1) by way of the contact point (14),
wherein the contact point (14) is provided on the printed circuit board (8) as a star point in order to provide a virtual or fixed potential,
wherein one or more capacitive components (17, 18, 19) and/or one or more inductive components are provided on the printed circuit board (8) in order to connect the contact-making element (10) to one or more fixed potentials, in particular supply voltage potentials.

2. Electric motor (1) according to Claim 1, **characterized in that** the contact-making element (10) is in the form of an electrically conductive spherical cap (10) which supports the rotor shaft (3).

3. Electric motor according to Claim 1, **characterized in that** the contact point (14) is electrically coupled to a supply voltage potential.

4. Electric motor according to Claim 1, **characterized in that** the contact point (14) is electrically connected to a conductor region which is arranged on the surface of the printed circuit board (8) and which serves as an earth surface for providing the virtual or fixed potential.

## Revendications

1. Moteur électrique (1), comprenant :
- un arbre de rotor électriquement conducteur (3) ;
- une carte à circuits imprimés (8) ; et
- un collecteur (5) disposé sur l'arbre de rotor (3), qui est en liaison électrique par le biais de balais (6) et d'un élément de connexion respectif (7) avec la carte à circuits imprimés (8),
**caractérisé par**
- un élément de contact (10) disposé sur l'arbre de rotor (3) pour le contact électrique de l'arbre de rotor (3) avec un point dé contact (14), et
- un élément de connexion (25) pour le contact électrique d'un boîtier de moteur (2) du moteur électrique (1) avec le point de contact (14),
le point de contact (14) étant prévu en tant que point stellaire sur la carte à circuits imprimés (8) afin de fournir un potentiel virtuel ou fixe, un ou plusieurs composants capacitifs (17, 18, 19) et/ou un ou plusieurs composants inductifs étant prévus sur la carte à circuits imprimés (8) afin de relier l'élément de contact (10) à un ou plusieurs potentiels fixes, en particulier à des potentiels de tension d'alimentation.

2. Moteur électrique (1) selon la revendication 1, **caractérisé en ce que** l'élément de contact (10) est réalisé sous forme de calotte électriquement conductrice (10) supportant l'arbre de rotor (3).

3. Moteur électrique selon la revendication 1, **caractérisé en ce que** le point de contact (14) est accouplé électriquement à un potentiel de tension d'alimentation.

4. Moteur électrique selon la revendication 1, **caractérisé en ce que** le point de contact (14) est connecté électriquement à une plage conductrice qui est disposée à plat sur la carte à circuits imprimés (8) et qui sert de surface de masse pour fournir le potentiel virtuel ou fixe.
